# EUROPEAN PATENT APPLICATION

(11) **EP 4 841 962 A1**
(43) Date of publication of application: **18.11.2026**
(21) Application number: 25176961.8
(22) Date of filing: 16.05.2025
(51) Int. Cl.: H04L 67/55, H04L 67/562, H04L 67/63

(54) **METHOD AND SYSTEM FOR DYNAMIC ROUTING AND OPTIMIZATION OF MQTT MESSAGE PAYLOAD SUBSETS**

(71) Applicant: Siemens Aktiengesellschaft, 80333 München (DE)
(72) Inventor: Bhadauria, Abhinandan, 560099 Bangalore, Karnataka (IN); S M, Sumukh, 560004 Bangalore, Karnataka (IN)
(74) Representative: Isarpatent

(57) **Abstract**

A computer-implemented method and system (102) for dynamically routing Message Queuing Telemetry Transport (MQTT) message payload subsets to consumer devices (108A, 108B) is disclosed. The method receives bulk payloads comprising multiple datapoints from at least one publisher (110) onto MQTT topics using an MQTT Broker Processor (104). A Payload controller (106), integrated with the processor, determines subscriber-specified subsets based on explicit consumer subscription requirements, generating dynamically named MQTT topics for targeted delivery. This minimizes memory and processing loads on edge devices by transmitting only relevant subsets. The system supports combining datapoints from multiple publishers into composite subsets for customized delivery. Synchronization between the MQTT Broker Processor and Payload controller further reduces redundant data storage and optimizes memory usage. System resource monitoring and dynamic visualization via a System controller (114) enable real-time operational insight. Dedicated hardware allocation ensures high throughput and responsiveness, supporting efficient, scalable edge deployments.

## Description

The present disclosure relates generally to the field of computer networking, and more specifically to the management and routing of message payloads in message queuing protocols such as Message Queuing Telemetry Transport (MQTT). In particular, it pertains to computer-implemented methods and systems for dynamic partitioning, allocation, and delivery of MQTT message payload subsets to consumer devices according to individualized subscription criteria.

The proliferation of interconnected devices and sensors in the realm of loT (Internet of Things) has led to an exponential increase in real-time data transmission requirements at the edge and cloud computing layers. In response, lightweight messaging protocols such as MQTT have gained widespread adoption for their efficiency, low overhead, and ability to support publish-subscribe communication models. MQTT brokers have become central elements in loT architectures by managing traffic between a wide array of publishers and consumer devices across various application domains.

Conventional MQTT broker implementations are generally designed to route messages in their entirety from publishers to subscribers. In environments with bulk data publishing, this often results in the delivery of superfluous data to consumer devices that do not require the full content of each message. The practice of delivering unfiltered or unpartitioned payloads can lead to excessive bandwidth consumption, unnecessary memory allocation, and increased processing burdens on constrained consumer hardware, especially at the edge.

These inefficiencies are further exacerbated in scenarios where multiple consumer devices possess unique and overlapping subscription interests. Edge devices, gateways, and analytics systems may become overwhelmed by the need to individually parse, filter, and aggregate the received data locally. As deployments scale, limitations in storage, processing, and network resources at the edge make it increasingly impractical to handle unpartitioned bulk message routing efficiently.

To address these challenges, the industry has explored advanced message processing and intelligent routing strategies within the broker infrastructure itself. Such approaches are anticipated to optimize resource usage, reduce redundant data transfers, and enhance the scalability of loT solutions-facilitating streamlined analytics, responsive control, and effective capacity management in modern distributed sensor and device networks.

Thus, it is an object of the present disclosure to provide a method and system for routing a plurality of Message Queuing Telemetry Transport (MQTT) message payload subsets dynamically to at least one consumer device according to individual subscription requirements.

The object of the present disclosure is achieved by a computer-implemented method for routing a plurality of Message Queuing Telemetry Transport (MQTT) message payload subsets dynamically to at least one consumer device according to individual subscription requirements.

The method comprises receiving, by an MQTT Broker Processor, a bulk payload from at least one publisher onto a MQTT topic. The bulk payload comprises a plurality of datapoints. The MQTT Broker Processor is defined as a computational entity responsible for receiving, parsing, and initially storing a plurality of MQTT PUBLISH messages arriving on a plurality of topics from a plurality of publishers. An example of the MQTT Broker Processor is a Mosquitto Broker instance running on an edge server in a smart manufacturing plant, handling a plurality of environmental sensor data streams. The MQTT topic is defined as a logical channel within the MQTT protocol used for message exchange. For example, the MQTT topic can be named "environment/data." A bulk payload is a message object that encapsulates a grouped set of datapoints, formatted using a serialization standard such as JSON, and includes a plurality of key-value pairs, for example, temperature: 23.5°C, pressure: 1.01 atm, and voltage: 220V. The reception of the bulk payload from at least one publisher onto the first MQTT topic occurs via MQTT CONNECT and PUBLISH protocol mechanisms, whereby the MQTT Broker Processor is configured to listen for incoming PUBLISH packets on a predefined TCP port, such as 1883. The plurality of datapoints are measured sensor values, where each datapoint can be individually tagged or encapsulated as a field in a JSON or equivalent serialization structure. The MQTT Broker Processor is configured to parse incoming bulk payloads, verify message integrity, and temporarily buffer the plurality of datapoints in memory for further processing.

The method further comprises receiving, by a Payload controller, a plurality of bulk payloads from a plurality of publishers, each onto at least one MQTT topic. The Payload controller is defined as a programmable component, software module, or hardware-integrated logic explicitly tasked with analyzing a plurality of incoming MQTT messages, determining consumer requirements, and orchestrating payload partitioning. A real-world example of the Payload controller is a PaCo (Payload controller) plugin deployed within a Mosquitto broker that inspects a plurality of sensor data received from a plurality of weather stations. The plurality of publishers are a set of devices or software agents configured to push a plurality of sensor readings-such as a temperature sensor, humidity sensor, and pressure sensor-each sending structured MQTT messages to a plurality of designated topics, such as "sensor/temperature", "sensor/humidity", and "sensor/pressure." Receiving the plurality of bulk payloads by the Payload controller involves protocol-level interception or callback registration so that as each MQTT PUBLISH packet reaches the MQTT Broker Processor, a notification or reference of the payload is forwarded for routing consideration by the Payload controller.

The method further comprises synchronizing, between the MQTT Broker Processor and the Payload controller, extraction of at least one subscriber-specified subset from the received bulk payload such that memory resources are allocated for the at least one subscriber-specified subset. The synchronization is achieved by explicit state tracking and mutual memory buffer access protocol between the MQTT Broker Processor and the Payload controller. A synchronization mechanism can include shared memory segments, message queues, or remote procedure call (RPC) interfaces, which ensure the exact timing and content of subset extraction are coordinated between the MQTT Broker Processor and the Payload controller. The extraction of the at least one subscriber-specified subset is achieved by application of an algorithm such as at least one of a filter-matching algorithm, a subscription-based parsing algorithm, or a pattern-matching algorithm on the buffered bulk payload data. The algorithm is configured to compare consumer required fields with incoming payload datapoints and select the required subset, ensuring memory allocation proportional only to the minimal required datapoints, not the entire original bulk payload. This procedure enables the Payload controller and MQTT Broker Processor to allocate memory resources solely for the requested data subset, thus preventing memory waste from unnecessary retention of unneeded data. In one example, the MQTT Broker Processor and the Payload controller employ a shared semaphore variable to coordinate concurrent access to internal payload buffers, ensuring that extraction triggers only after subscriber specifications are updated.

The method further comprises determining, by the Payload controller integrated with the MQTT Broker Processor, at least one subscriber-specified subset from the plurality of datapoints, based on explicit subscription requirements of at least one consumer device. The determination is achieved by processing subscriber registration information, where each subscription specifies particular fields or datapoints of interest, for example, only "temperature" and "humidity" from an environmental data payload. The Payload controller is configured to parse explicit subscription requests of the consumer device, match required fields within incoming bulk payloads, and select only those datapoints for inclusion in the subscriber-specified subset. The determining step is achieved by application of an algorithm such as at least one of a rules-engine algorithm, a policy-based subscription filter algorithm, or a user-profile matching algorithm on the subscription registry and payload metadata. The algorithm is configured to identify the intersection between requested fields and available datapoints. For example, if the consumer device requests "humidity," the Payload controller is configured to scan the incoming payload for the "humidity" key and extract the corresponding data, for example, humidity:56%. The determination step allows consumer devices to receive only the minimal, necessary data, reducing message processing and storage at edge devices as compared to conventional approaches, where the entire bulk payload is routed to every subscriber regardless of their individual needs.

The method further comprises determining, by the Payload controller, combinational datapoints requested by at least one consumer device from at least two of the plurality of received bulk payloads. This step involves the Payload controller analyzing subscription descriptors to identify requests where the consumer requires a merge of datapoints from separate publishers, for example, "temperature" from a weather sensor and "pressure" from a machinery sensor. The determining of the combinational datapoints is achieved by application of an algorithm such as at least one of a multi-source aggregation algorithm, a join-operation algorithm, or a combinatorial set-intersection algorithm on the incoming stream of payload buffers. The algorithm is configured to dynamically map existing publisher data to explicit multi-field requirements of any subscriber. For instance, if a consumer requests a report containing "power usage" and "ambient light," published independently, the Payload controller merges those values into a single composite subset. This approach greatly simplifies message subscription and filtering complexity at the consumer device, reducing device-side computational resources required for multi-topic aggregation.

The method further comprises generating, by the Payload controller, a dynamically named MQTT topic associated with the determined at least one subscriber-specified subset according to a predetermined naming convention. The dynamic naming convention is defined as a string pattern incorporating both the original topic identifier and a suffix or prefix representing the subset or consumer identifier, for example: "temperature_subset_userA". The Payload controller is configured to construct such topic names at runtime, based on internal mapping tables and naming logic. Examples of naming conventions include "SensorData/Subset/Temp", "BulkData/Aggregate/Humidity", or "Device123/SubsetA". The use of dynamically named MQTT topics aligned with subsets allows immediate and discoverable mapping between message content and topic name, improving extensibility and traceability over traditional static topic mappings.

The method further comprises allocating, by the Payload controller, the determined at least one subscriber-specified subset to the dynamically named MQTT topic for routing to the at least one consumer device. The Payload controller is configured to create and maintain a mapping registry associating subset payload buffers with their respective dynamic topic identifiers. For example, the subset "temperature:22.4°C" is allocated to the topic "EnvData_Subset_Temp".

This allocation allows the Payload controller to streamline subsequent subscription management and payload delivery.

The method further comprises outputting, by the MQTT Broker Processor, the determined at least one subscriber-specified subset to the at least one consumer device via the dynamically named MQTT topic, thereby reducing memory and processing resource consumption at resource-constrained edge devices. The outputting process involves the MQTT Broker Processor serializing only the relevant subset and publishing it under the constructed dynamic topic, and transmitting the subset to the network addresses of registered subscribers. For example, if "Client456" subscribes to "AirQuality_Subset_PM25", the MQTT Broker Processor outputs only PM25 data to that client, conserving both bandwidth and memory use at the consumer device. This targeted delivery is beneficial for loT gateways with limited CPU and RAM, enabling support for a greater number of consumer devices without degradation in throughput or response latency. In a smart agricultural deployment, a subscriber device assigned to irrigation management solely receives soil moisture subset values, showing a real-world benefit of reduced device resource consumption.

The method further comprises generating, by the Payload controller, a composite subset comprising the determined combinational datapoints. The Payload controller is configured to listen for multi-topic subscription instructions from consumer devices, buffer batches of payloads from multiple publishing sources, and merge requested datapoint fields into an integrated structure. For example, a composite subset may be represented as {"temperature":22.1, "pressure":1.02, "humidity":60%}. The generation of the composite subset is achieved by application of an algorithm such as at least one of a buffer-merge algorithm, a tuple-combination algorithm, or a stream-correlation algorithm on collected payloads from different MQTT topics. The outputting of the composite subset enables precisely targeted information delivery, thereby relieving consumer devices from heavy context management and message merging operations. For instance, an environmental analytics device can subscribe once to
"CompositeWeatherTopic" and automatically receive periodic aggregates of all requested weather metrics.

The method further comprises allocating, by the Payload controller, the composite subset to a further dynamically named MQTT topic. The Payload controller is configured to construct an appropriate topic identifier, such as "Composite_AQ_TempPressHum," and maps the generated composite subset to this topic. The allocation step is registered in the internal topic-payload registry, ensuring correct routing and consumer notification for each appended subset.

The method further comprises outputting, by the Payload controller, the composite subset to the at least one consumer device, thereby reducing message subscription and filtering complexity at the at least one consumer device. The Payload controller serializes the composite subset and signals the MQTT Broker Processor for delivery, ensuring that the recipient device receives a minimal, contextually rich data object. The consumer device is only required to process the finalized information. For example, in an industrial automation environment, an edge analytics client subscribes to a single topic and immediately receives a ready-to-use composite, increasing real-time analytic efficiency compared to separately subscribing and merging messages.

The method further comprises minimizing redundant data storage and memory usage. This is accomplished by the combined operations of the Payload controller and the MQTT Broker Processor eliminating unnecessary duplicate buffers, maintaining only essential subset payloads in local memory at the edge. Redundancy minimization is achieved by pointer-based memory management techniques, reference counting, or explicit payload lifecycle control protocols following message delivery. This approach scales efficiently as consumer numbers increase as compared to traditional MQTT brokers that store complete message copies per subscriber.

The method further comprises allocating, by the edge device hardware, a network interface queue dedicated to MQTT protocol traffic. The edge device hardware is defined as a physical processor, RAM module, and network interface circuitry embedded within or co-located with the data source. The edge device hardware is configured to establish a dedicated queue, such as a network buffer pool exclusively mapped to TCP port 1883, so that MQTT packets receive prioritized and resource-isolated transmission paths. Real-world examples of the edge device hardware are a Raspberry Pi equipped with an Ethernet interface in a smart grid monitoring station, or a custom embedded controller in a home automation system.

The method further comprises allocating, by the edge device hardware, processor time slices to at least the MQTT Broker Processor and the Payload controller for message processing. This step involves configuring scheduler-level settings, such as Linux cgroups or RTOS scheduler policies, to establish minimum CPU time allocations for each internal component, ensuring predictable, real-time message routing and payload manipulation even amidst transient system loads from other operations. Processor time slicing guarantees that critical routines in the MQTT Broker Processor and Payload controller remain unsaturated, which is essential for sustained, low-latency operation. For example, in a health monitoring device with multiple internal subsystems, the processor reserves fixed cycles for MQTT traffic management, thereby preventing stalled or delayed message passing.

The method further comprises allocating, by the edge device hardware, memory buffers for temporary storage of MQTT payload data such that system throughput and latency are maintained. The edge device hardware instantiates memory buffers within RAM, with block sizes dynamically set based on anticipated payload volume. Each temporary buffer retains either the full or subset payload before routing, supporting high-throughput data bursts and mitigating traffic spikes. Buffer management policies enable direct handoff and rapid reclamation of memory post-delivery, which increases system responsiveness and helps avoid bottlenecks typical of general-purpose buffering. For example, in a hospital patient monitoring network, the allocation of dedicated MQTT payload memory buffers prevents vital sign data loss during peak emergency admissions.

The method further comprises determining, by a System controller within the edge device, resource usage metrics comprising at least processor utilization and memory consumption during MQTT message payload processing. The System controller is defined as an embedded monitoring agent or programmable co-processor responsible for tracking time-averaged and instantaneous system resource loads such as CPU load (e.g., 43%) and RAM usage (e.g., 67MB used) for each messaging module. The determining of resource usage metrics is achieved by application of an algorithm such as at least one of an OS-level utilization polling algorithm, a real-time telemetry aggregation algorithm, or a threshold-based event detection algorithm on internally exposed performance counters. Algorithms are configured to detect peaks, leaks, or utilization trendlines; outputs include warnings or status reports, which are then available for operator awareness and load balancing. For instance, the System controller is configured to issue an alert if processing reaches 75% CPU, allowing proactive resource allocation.

The method further comprises generating, by the System controller, dynamic visualization data representing the determined resource usage metrics. The System controller formats metrics-for example, "CPU: 55%, Memory: 33MB"-as structured data suitable for graphical display, and produces time-series charts, utilization heatmaps, or resource dashboards for display within a local or remote management UI. Visualization data is formatted according to standard dimensions, such as percentage, bytes, and time (e.g., chart axes of time vs. RAM usage) to support fast interpretation by technical operators.

The method further comprises displaying, by the System controller, a performance dashboard based on the dynamic visualization data, thereby facilitating operational awareness and capacity management during MQTT message routing. The System controller is configured to update visualization panels onscreen or via remote web interface in real time, showing system status summaries, historical usage trends, and actionable insights. For example, in a pipeline maintenance monitoring center, all edge MQTT devices are shown on a live dashboard, immediately alerting staff to anomalies in device resource usage, thereby supporting uninterrupted monitoring of critical infrastructure.

The method allows for dynamic routing of only subscriber-relevant subsets of MQTT payloads, which dramatically reduces the amount of unnecessary data transmitted to each consumer device and optimizes network usage. By receiving bulk payloads at the edge via the MQTT Broker Processor, the system minimizes upstream communication overhead and centralizes processing at the network edge, leading to reduced latency and improved responsiveness. Determining subscriber-specified subsets using a Payload controller ensures each consumer receives exactly the data required for its operation, enhancing data privacy and minimizing post-processing effort on the consumer side. Dynamically generating a unique MQTT topic for each subset ensures precise routing and easy management of user-specific payload channels, which aids in scalability and systematic topic organization. Allocating subscriber-specific subsets to these dynamic topics prevents resource waste and duplicate message transmissions, ensuring only targeted data resides in memory buffers. Outputting the filtered subsets to subscribers via these dedicated topics results in substantial reductions in both processing and memory overhead at resource-constrained edge devices, supporting higher device density and more sustainable edge deployments.

Supporting receipt of multiple bulk payloads from different publishers and enabling the Payload controller to combine and extract composite data subsets allows for powerful, customized data streams tailored to complex user requirements, eliminating the need for clients to subscribe to and filter multiple disparate topics themselves. The generation and allocation of a composite subset to a further dynamically named MQTT topic further simplifies consumer logic by aggregating necessary data server-side, leading to lower software complexity and resource utilization on end devices. Outputting these composite subsets to subscribers offloads aggregation and filtering logic away from consumer devices-thereby reducing codebase complexity, memory requirements, and the likelihood of processing errors during message subscription and filtering.

Synchronization between the MQTT Broker Processor and the Payload controller allows precise allocation of memory resources only as needed for each subscriber subset, minimizing unnecessary replicated storage and avoiding memory bloat. This tightly coupled data exchange ensures no redundant allocations, lowers memory consumption, and maximizes edge device efficiency-which is crucial in embedded or constrained environments.

The inclusion of a System controller that continuously tracks processor utilization and memory consumption during MQTT processing provides essential operational visibility, allowing operators to quickly recognize bottlenecks, anticipate resource exhaustion, and make informed scaling decisions. Dynamic visualization and dashboarding of these metrics streamlines capacity management and enhances service reliability-facilitating proactive tuning and troubleshooting in fast-changing industrial or loT edge deployments.

Allocation of dedicated network interface queues, processor time slices, and memory buffers by the edge device hardware ensures that MQTT message traffic is handled with predictable throughput and low latency, avoiding contention with other system processes. This fine-grained resource partitioning delivers higher system throughput, reduced jitter, and ensures that message delivery deadlines are met even as system load varies, thereby supporting deterministic real-time operation for mission-critical applications.

The object of the present disclosure is further achieved by a system for routing a plurality of MQTT message payload subsets dynamically to at least one consumer device according to individual subscription requirements is disclosed.

The system comprises an MQTT Broker Processor configured to receive at least one bulk payload from at least one publisher onto a first MQTT topic, the bulk payload comprising a plurality of datapoints. The definition, format, and example for the MQTT Broker Processor, bulk payload, and MQTT topic are as described above.

The system further comprises a Payload controller configured to receive a plurality of bulk payloads from a plurality of publishers. The Payload controller is configured to manage a plurality of incoming MQTT message notifications from the MQTT Broker Processor, catalogue a plurality of publisher origins, and prepare data for downstream subset extraction.

The system further comprises a synchronization mechanism configured to synchronize extraction of at least one subscriber-specified subset between the MQTT Broker Processor and the Payload controller. The synchronization mechanism is defined as a logical or physical protocol-such as signaling semaphores, mutexes, shared memory segments, or event-based triggers-used to coordinate concurrent and conflict-free subset extraction, memory allocation, and message handoff between the MQTT Broker Processor and the Payload controller. For example, a shared circular buffer with mutex locking supports synchronized extraction and efficient buffer reuse.

The system further comprises a Payload controller integrated with the MQTT Broker Processor and configured to determine at least one subscriber-specified subset from a plurality of datapoints in accordance with explicit subscription requirements of at least one consumer device. Integration occurs via local API connections, shared configuration tables, or plugin interfaces, supporting real-time, low-latency responses to changes in subscriber requirements or in newly received payloads.

The system further comprises the Payload controller configured to determine combinational datapoints requested by at least one consumer device from at least two of the plurality of bulk payloads for generating a composite subset. This configuration enables the Payload controller to support multi-topic or multi-field aggregation schemes, enabling deployment in advanced analytic or control applications by collecting and composing a plurality of datapoints from disparate sources.

The system further comprises the Payload controller further configured to generate a dynamically named MQTT topic mapped to the at least one subscriber-specified subset according to a predetermined naming convention. Details of dynamic topic generation and naming convention are as previously described.

The system further comprises the Payload controller further configured to allocate the determined at least one subscriber-specified subset to the dynamically named MQTT topic for further routing. The Payload controller is configured to reflect this allocation in internal routing registers and flag the referenced payload for delivery in the next publish cycle.

The system further comprises the MQTT Broker Processor further configured to output the determined at least one subscriber-specified subset to the at least one consumer device via the dynamically named MQTT topic, thereby reducing resource utilization at edge hardware. The configuration ensures that only relevant payloads traverse capacity-limited network and hardware layers, maintaining optimal system usage and performance.

The system further comprises the Payload controller configured to allocate the composite subset to a further dynamically named MQTT topic. This allocation is recorded in the payload routing registry and is used to direct composite payloads to consumer endpoints having matching interests.

The system further comprises the Payload controller configured to output the composite subset to the at least one consumer device, thereby reducing consumer device processing burden. For example, in a factory-wide predictive maintenance application, a single subscription suffices for a client to receive integrated, periodic state of all systems-eliminating device-side complexity for merging and correlating messages from multiple publishers.

The system further comprises minimizing redundant data storage and memory usage. Through subset buffering and efficient memory management, duplicate payload buffers are avoided, and per-consumer memory requirements scale linearly with subscriber count, preventing the overhead associated with traditional per-subscriber message copy practices.

The system further comprises the edge device hardware configured to allocate a plurality of network interface queues dedicated to MQTT protocol traffic. This arrangement enables quality-of-service-aware routing, prioritized channel allocation, and traffic isolation-for example, reserving lower-latency queues for safety-critical telemetry traffic and default queues for noncritical updates.

The system further comprises the edge device hardware configured to allocate processing time slices to at least the MQTT Broker Processor and the Payload controller. Process time is prioritized according to system policy, ensuring that the end-to-end message flow avoids bottlenecks and supports sustained, reliable operation-even in times of peak processor load.

The system further comprises the edge device hardware configured to allocate memory resources for temporary MQTT message storage, thereby maintaining system throughput and responsiveness. By dynamically tuning memory budgets for each routing component, the system prevents message queuing collapses and loss of fidelity during expected demand spikes.

The system further comprises a System controller within the edge device hardware configured to determine at least processor usage and memory consumption associated with MQTT message payload routing. The System controller monitors all internal messaging components and exposes standardized resource metrics, supporting early detection of processing or memory saturation.

The system further comprises the System controller configured to generate dynamic visualization data. The System controller processes real-time monitoring metrics to generate summary tables, graphs, and display widgets that visualize resource usage trends and detailed component status information.

The system further comprises the System controller configured to display a resource dashboard for operational visibility. The resource dashboard delivers situational awareness and supports dynamic resource scaling decisions, reducing system downtime and expediting issue resolution. The availability of live operational insights for all actors and processes is an advantage unavailable in legacy MQTT solutions that lack embedded resource monitoring and dashboard capabilities.

The system is further configured such that the Payload controller dynamically partitions bulk payloads into subset payloads strictly complying with each subscriber's explicit requirements, generates and registers new MQTT topics following a structured naming convention for these subset payloads, and orchestrates real-time deliveries directly to consumer devices. For example, in a smart agricultural deployment, each sensor client receives only the required environmental parameter, such as soil moisture or temperature, which conserves memory and network bandwidth and thus increases the number of edge devices the infrastructure supports compared to conventional bulk routing.

It is to be expressly understood that, while in certain embodiments the Payload controller (PaCo) may be deployed within or co-located on the edge device hardware for local processing purposes, the present disclosure is not so limited. In alternative embodiments, the Payload controller may be implemented on remote computing infrastructure external to the edge device hardware, such as on a centralized network server, within a cloud-based service, or as a distributed application spanning multiple computational nodes. In such configurations, the Payload controller is operably connected, via a communications network, to the MQTT Broker Processor and/or other relevant system components, and is capable of receiving, analyzing, and partitioning MQTT bulk payloads routed through or accessible from the edge network. This flexible deployment model enables adaptation of the Payload controller to a variety of system architectures-ranging from fully embedded industrial edge solutions to hybrid and cloud-centric loT deployments-ensuring that dynamic routing, payload extraction, and subscriber-specific message delivery functions can be performed independently of the physical location of the edge hardware. Accordingly, all methods and systems described herein are intended to encompass implementations in which the Payload controller logic or functionality is executed outside of, or apart from, the resource-constrained edge device hardware, provided appropriate connectivity and access to relevant payload data streams is maintained.

The present disclosure is further described hereinafter with reference to illustrated embodiments shown in the accompanying drawings, in which:
- FIG. 1: is a block diagram illustrating a system for dynamic MQTT payload subset routing, implemented within an edge device hardware 102, according to an embodiment of the present disclosure.
- FIG. 2: illustrates an exemplary sequence diagram detailing the flow of data and control messages among a plurality of publishers, the MQTT Broker Processor, the Payload controller, and multiple consumer devices according to an embodiment of the present disclosure; and
- FIG. 3: is a process flowchart illustrating an exemplary method for dynamically routing a plurality of Message Queuing Telemetry Transport (MQTT) message payload subsets to at least one consumer device based on individual subscription needs, according to an embodiment of the present disclosure.

Various embodiments are described with reference to the drawings, wherein like reference numerals are used to re-fer the drawings, wherein like reference numerals are used to refer to like elements throughout. In the following de-scription, for the purpose of explanation, numerous specific details are set forth in order to provide thorough understanding of one or more embodiments. It may be evident that such embodiments may be practiced without these specific details.

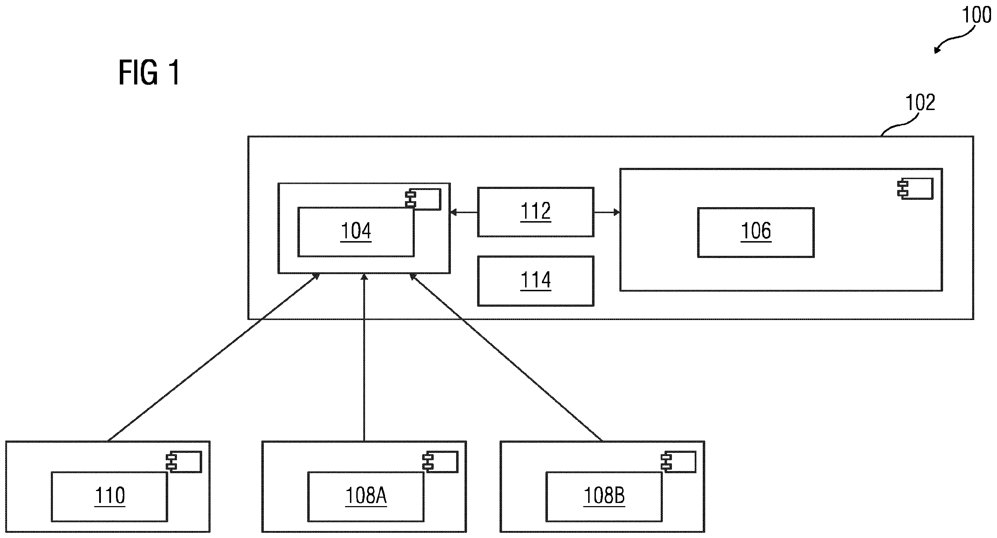

FIG. 1 is a block diagram illustrating a system 100 for dynamic MQTT payload subset routing, implemented within an edge device hardware 102, according to an embodiment of the present disclosure. In FIG. 1, the edge device hardware 102 is communicatively connected to a publisher 110 and multiple consumer devices, including a first consumer device 108A and a second consumer device 108B. The edge device hardware 102 is implemented as a physical platform such as an embedded gateway or an industrial edge server located proximate to sensor data sources, configured to execute real-time data processing and efficient payload delivery within industrial, smart building, or other loT deployments.

The edge device hardware 102 comprises an MQTT Broker Processor 104, which is responsible for receiving bulk MQTT message payloads from one or more publishers, such as publisher 110. The MQTT Broker Processor 104 listens for incoming MQTT PUBLISH messages on predefined topics, manages network connections, and initially stores or buffers the incoming bulk data. For example, in a smart manufacturing scenario, the MQTT Broker Processor 104 might receive structured environmental sensor readings-such as temperature, pressure, and humidity-in a single bulk message on a topic like "environment/data."

The edge device hardware 102 may include a processor for executing instructions and managing device operations, and a memory unit for storing data and executable code. However, according to another embodiment, the edge device hardware 102 may be implemented by more or less components than those illustrated in components.

Also within the edge device hardware 102 is the Payload controller 106, which operates in tandem with the MQTT Broker Processor 104 to analyze incoming payloads and determine the specific subsets of data required by individual consumer devices. The Payload controller 106 interprets explicit subscription requirements submitted by consumer devices, parses incoming bulk payloads, and applies algorithms to extract only those datapoints specified by each subscriber. For instance, if consumer device 108A subscribes only to temperature updates and device 108B to humidity, the Payload controller 106 partitions the bulk payload accordingly and prepares targeted subset messages for each device.

The edge device hardware 102 further includes a Synchronization Mechanism 112, coordinating data flow and memory allocation between the MQTT Broker Processor 104 and the Payload controller 106. The Synchronization Mechanism 112 may comprise shared memory segments, semaphores, or event-based triggers to ensure mutual buffer access, integrity of data extraction, and real-time memory optimization. For example, it can employ a shared semaphore to signal when new payload data is available for partitioning, while preventing race conditions during concurrent access.

Additionally, a System controller 114 is integrated within the edge device hardware 102, providing real-time monitoring and visualization of resource utilization, such as processor load and memory consumption, during message handling operations. The System controller 114 gathers operational metrics from all internal messaging components and generates visualization data for performance dashboards. For example, it may display CPU and RAM usage graphs that allow operators or remote administrators to identify overload conditions, thus facilitating fast troubleshooting and capacity planning.

The publisher 110 is an external device or data source configured to send structured MQTT PUBLISH messages containing sensor data or telemetry information to the edge device hardware 102. In a practical scenario, publisher 110 might be a multi-sensor device in an industrial plant sending periodic status updates. The first consumer device 108A and the second consumer device 108B represent end-user devices or downstream systems that subscribe to dynamically generated MQTT topics corresponding to their explicit data interests. For example, 108A could be an equipment monitoring interface that only requires voltage data, while 108B might be an air quality monitoring device subscribing exclusively to environmental humidity readings.

All these components within and external to the edge device hardware 102 collaborate to enable efficient, subscription-specific routing of MQTT payload subsets. The system ensures that each consumer device receives only the data required for its operation, reducing network and memory overheads and improving scalability in resource-constrained edge environments.

The MQTT Broker Processor 104 is configured to receive a bulk payload from at least one publisher 110 onto a MQTT topic. The bulk payload comprises a plurality of datapoints. The MQTT Broker Processor 104 is defined as a computational entity responsible for receiving, parsing, and initially storing a plurality of MQTT PUBLISH messages arriving on a plurality of topics from a plurality of publishers 110. An example of the MQTT Broker Processor 104 is a Mosquitto Broker instance running on edge device hardware 102 in a smart manufacturing plant, handling a plurality of environmental sensor data streams. The MQTT topic is defined as a logical channel within the MQTT protocol used for message exchange. For example, the MQTT topic can be named "environment/data." A bulk payload is a message object that encapsulates a grouped set of datapoints, formatted using a serialization standard such as JSON, and includes a plurality of key-value pairs, for example, temperature: 23.5°C, pressure: 1.01 atm, and voltage: 220V. The reception of the bulk payload from at least one publisher 110 onto the first MQTT topic occurs via MQTT CONNECT and PUBLISH protocol mechanisms, whereby the MQTT Broker Processor 104 is configured to listen for incoming PUBLISH packets on a predefined TCP port, such as 1883. The plurality of datapoints are measured sensor values, where each datapoint can be individually tagged or encapsulated as a field in a JSON or equivalent serialization structure. The MQTT Broker Processor 104 is configured to parse incoming bulk payloads, verify message integrity, and temporarily buffer the plurality of datapoints in memory for further processing.

The Payload controller 106 is configured to receive a plurality of bulk payloads from a plurality of publishers 110, each onto at least one MQTT topic. The Payload controller 106 is defined as a programmable component, software module, or hardware-integrated logic explicitly tasked with analyzing a plurality of incoming MQTT messages, determining consumer requirements, and orchestrating payload partitioning. A real-world example of the Payload controller 106 is a PaCo (Payload controller) plugin deployed within a Mosquitto broker that inspects a plurality of sensor data received from a plurality of weather stations. The plurality of publishers 110 are a set of devices or software agents configured to push a plurality of sensor readings-such as a temperature sensor, humidity sensor, and pressure sensor-each sending structured MQTT messages to a plurality of designated topics, such as "sensor/temperature", "sensor/humidity", and "sensor/pressure." The Payload controller 106 is configured to receive the plurality of bulk payloads by protocol-level interception or callback registration so that as each MQTT PUBLISH packet reaches the MQTT Broker Processor 104, a notification or reference of the payload is forwarded for routing consideration by the Payload controller 106.

The Synchronization Mechanism 112 is configured to synchronize, between the MQTT Broker Processor 104 and the Payload controller 106, extraction of at least one subscriber-specified subset from the received bulk payload such that memory resources are allocated for the at least one subscriber-specified subset. The Synchronization Mechanism 112 achieves synchronization by explicit state tracking and mutual memory buffer access protocol between the MQTT Broker Processor 104 and the Payload controller 106. The Synchronization Mechanism 112 can include shared memory segments, message queues, or remote procedure call (RPC) interfaces, which ensure the exact timing and content of subset extraction are coordinated between the MQTT Broker Processor 104 and the Payload controller 106. The extraction of the at least one subscriber-specified subset is achieved by application of an algorithm such as at least one of a filter-matching algorithm, a subscription-based parsing algorithm, or a pattern-matching algorithm on the buffered bulk payload data. The algorithm is configured to compare consumer required fields with incoming payload datapoints and select the required subset, ensuring memory allocation proportional only to the minimal required datapoints, not the entire original bulk payload. This procedure enables the Payload controller 106 and MQTT Broker Processor 104 to allocate memory resources solely for the requested data subset, thus preventing memory waste from unnecessary retention of unneeded data. In one example, the MQTT Broker Processor 104 and the Payload controller 106 employ a shared semaphore variable to coordinate concurrent access to internal payload buffers, ensuring that extraction triggers only after subscriber specifications are updated.

The Payload controller 106, integrated with the MQTT Broker Processor 104, is configured to determine at least one subscriber-specified subset from the plurality of datapoints, based on explicit subscription requirements of at least one consumer device 108A, 108B. The Payload controller 106 achieves determination by processing subscriber registration information, where each subscription specifies particular fields or datapoints of interest, for example, only "temperature" and "humidity" from an environmental data payload. The Payload controller 106 is configured to parse explicit subscription requests of the consumer device 108A, 108B, match required fields within incoming bulk payloads, and select only those datapoints for inclusion in the subscriber-specified subset. The determining step is achieved by application of an algorithm such as at least one of a rules-engine algorithm, a policy-based subscription filter algorithm, or a user-profile matching algorithm on the subscription registry and payload metadata. The algorithm is configured to identify the intersection between requested fields and available datapoints. For example, if the consumer device 108A, 108B requests "humidity," the Payload controller 106 scans the incoming payload for the "humidity" key and extracts the corresponding data, for example, humidity:56%. The determination step allows consumer devices 108A, 108B to receive only the minimal, necessary data, reducing message processing and storage at edge device hardware 102 as compared to conventional approaches where the entire bulk payload is routed to every subscriber regardless of their individual needs.

The Payload controller 106 is configured to determine combinational datapoints requested by at least one consumer device 108A, 108B from at least two of the plurality of received bulk payloads. This step involves the Payload controller 106 analyzing subscription descriptors to identify requests where the consumer device 108A, 108B requires a merge of datapoints from separate publishers 110, for example, "temperature" from a weather sensor and "pressure" from a machinery sensor. The Payload controller 106 determines the combinational datapoints by application of an algorithm such as at least one of a multi-source aggregation algorithm, a join-operation algorithm, or a combinatorial set-intersection algorithm on the incoming stream of payload buffers. The algorithm is configured to dynamically map publisher 110 data to explicit multi-field requirements of any subscriber. For instance, if a consumer device 108A, 108B requests a report containing "power usage" and "ambient light," published independently, the Payload controller 106 merges those values into a single composite subset. This approach simplifies message subscription and filtering complexity at the consumer device 108A, 108B, reducing device-side computational resources required for multi-topic aggregation.

The Payload controller 106 is configured to generate a dynamically named MQTT topic associated with the determined at least one subscriber-specified subset according to a predetermined naming convention. The dynamic naming convention is defined as a string pattern incorporating both the original topic identifier and a suffix or prefix representing the subset or consumer identifier, for example: "temperature_subset_userA". The Payload controller 106 is configured to construct such topic names at runtime, based on internal mapping tables and naming logic. Examples of naming conventions include "SensorData/Subset/Temp", "BulkData/Aggregate/Humidity", or "Device123/SubsetA". The use of dynamically named MQTT topics aligned with subsets allows immediate and discoverable mapping between message content and topic name, improving extensibility and traceability over traditional static topic mappings.

The Payload controller 106 is configured to allocate the determined at least one subscriber-specified subset to the dynamically named MQTT topic for routing to at least one consumer device 108A, 108B. The Payload controller 106 creates and maintains a mapping registry associating subset payload buffers with their respective dynamic topic identifiers. For example, the subset "temperature:22.4°C" is allocated to the topic "EnvData_Subset_Temp". This allocation allows the Payload controller 106 to streamline subsequent subscription management and payload delivery.

The MQTT Broker Processor 104 is configured to output the determined at least one subscriber-specified subset to at least one consumer device 108A, 108B via the dynamically named MQTT topic, thereby reducing memory and processing resource consumption at resource-constrained edge device hardware 102. The MQTT Broker Processor 104 serializes only the relevant subset and publishes it under the constructed dynamic topic, transmitting the subset to the network addresses of registered subscribers. For example, if "Client456" subscribes to "AirQuality_Subset_PM25", the MQTT Broker Processor 104 outputs only PM25 data to that client, conserving both bandwidth and memory use at the consumer device 108A, 108B. This targeted delivery is beneficial for edge device hardware 102 with limited CPU and RAM, enabling support for a greater number of consumer devices 108A, 108B without degradation in throughput or response latency. In a smart agricultural deployment, a subscriber device 108A assigned to irrigation management solely receives soil moisture subset values, showing a real-world benefit of reduced device resource consumption.

The Payload controller 106 is configured to generate a composite subset comprising the determined combinational datapoints. The Payload controller 106 listens for multi-topic subscription instructions from consumer devices 108A, 108B, buffers batches of payloads from multiple publishing sources, and merges requested datapoint fields into an integrated structure. For example, a composite subset may be represented as {"temperature":22.1, "pressure":1.02, "humidity":60%}. The Payload controller 106 achieves generation of the composite subset by application of an algorithm such as at least one of a buffer-merge algorithm, a tuple-combination algorithm, or a stream-correlation algorithm on collected payloads from different MQTT topics. The outputting of the composite subset enables precisely targeted information delivery, thereby relieving consumer devices 108A, 108B from heavy context management and message merging operations. For instance, an environmental analytics device 108A can subscribe once to "CompositeWeatherTopic" and automatically receive periodic aggregates of all requested weather metrics.

The Payload controller 106 is configured to allocate the composite subset to a further dynamically named MQTT topic. The Payload controller 106 constructs an appropriate topic identifier, such as "Composite_AQ_TempPressHum," and maps the generated composite subset to this topic. The allocation step is registered in the internal topic-payload registry, ensuring correct routing and consumer notification for each appended subset.

The Payload controller 106 is configured to output the composite subset to at least one consumer device 108A, 108B, thereby reducing message subscription and filtering complexity at the consumer device 108A, 108B. The Payload controller 106 serializes the composite subset and signals the MQTT Broker Processor 104 for delivery, ensuring that the recipient device 108A, 108B receives a minimal, contextually rich data object. The consumer device 108A, 108B is only required to process the finalized information. For example, in an industrial automation environment, a consumer device 108A subscribes to a single topic and immediately receives a ready-to-use composite, increasing real-time analytic efficiency compared to separately subscribing and merging messages.

The Payload controller 106 and the MQTT Broker Processor 104 are configured to minimize redundant data storage and memory usage. The combined operations of the Payload controller 106 and the MQTT Broker Processor 104 eliminate unnecessary duplicate buffers, maintaining only essential subset payloads in local memory at edge device hardware 102. Redundancy minimization is achieved by pointer-based memory management techniques, reference counting, or explicit payload lifecycle control protocols following message delivery. This approach scales efficiently as the number of consumer devices 108A, 108B increases, as compared to traditional MQTT brokers that store complete message copies per subscriber.

The edge device hardware 102 is configured to allocate a network interface queue dedicated to MQTT protocol traffic. The edge device hardware 102 is defined as physical processor, RAM module, and network interface circuitry embedded within or co-located with the data source. The edge device hardware 102 establishes a dedicated queue, such as a network buffer pool exclusively mapped to TCP port 1883, so that MQTT packets receive prioritized and resource-isolated transmission paths. Real-world examples of the edge device hardware 102 are a Raspberry Pi equipped with an Ethernet interface in a smart grid monitoring station, or a custom embedded controller in a home automation system.

The edge device hardware 102 is configured to allocate processor time slices to at least the MQTT Broker Processor 104 and the Payload controller 106 for message processing. This step involves configuring scheduler-level settings, such as Linux cgroups or RTOS scheduler policies, to establish minimum CPU time allocations for each internal component, ensuring predictable, real-time message routing and payload manipulation even amidst transient system loads from other operations. Processor time slicing guarantees that critical routines in the MQTT Broker Processor 104 and Payload controller 106 remain unsaturated, which is essential for sustained, low-latency operation. For example, in a health monitoring device with multiple internal subsystems, the processor reserves fixed cycles for MQTT traffic management, thereby preventing stalled or delayed message passing.

The edge device hardware 102 is configured to allocate memory buffers for temporary storage of MQTT payload data such that system throughput and latency are maintained. The edge device hardware 102 instantiates memory buffers within RAM, with block sizes dynamically set based on anticipated payload volume. Each temporary buffer retains either the full or subset payload before routing, supporting high-throughput data bursts and mitigating traffic spikes. Buffer management policies enable direct handoff and rapid reclamation of memory post-delivery, which increases system responsiveness and helps avoid bottlenecks typical of general-purpose buffering. For example, in a hospital patient monitoring network, the allocation of dedicated MQTT payload memory buffers by edge device hardware 102 prevents vital sign data loss during peak emergency admissions.

The System controller 114 within edge device hardware 102 is configured to determine resource usage metrics comprising at least processor utilization and memory consumption during MQTT message payload processing. The System controller 114 is defined as an embedded monitoring agent or programmable co-processor responsible for tracking time-averaged and instantaneous system resource loads such as CPU load (e.g., 43%) and RAM usage (e.g., 67MB used) for each messaging module. The System controller 114 achieves determination of resource usage metrics by application of an algorithm such as at least one of an OS-level utilization polling algorithm, a real-time telemetry aggregation algorithm, or a threshold-based event detection algorithm on internally exposed performance counters. Algorithms are configured to detect peaks, leaks, or utilization trendlines; outputs include warnings or status reports, which are then available for operator awareness and load balancing. For instance, the System controller 114 is configured to issue an alert if processing reaches 75% CPU, allowing proactive resource allocation.

The System controller 114 is configured to generate dynamic visualization data representing the determined resource usage metrics. The System controller 114 formats metrics-for example, "CPU: 55%, Memory: 33MB"-as structured data suitable for graphical display, and produces time-series charts, utilization heatmaps, or resource dashboards for display within a local or remote management UI. Visualization data is formatted according to standard dimensions, such as percentage, bytes, and time (e.g., chart axes of time vs. RAM usage) to support fast interpretation by technical operators.

The System controller 114 is configured to display a performance dashboard based on the dynamic visualization data, thereby facilitating operational awareness and capacity management during MQTT message routing. The System controller 114 updates visualization panels onscreen or via remote web interface in real time, showing system status summaries, historical usage trends, and actionable insights. For example, in a pipeline maintenance monitoring center, all edge device hardware 102 MQTT devices are shown on a live dashboard, immediately alerting staff to anomalies in device resource usage, thereby supporting uninterrupted monitoring of critical infrastructure.

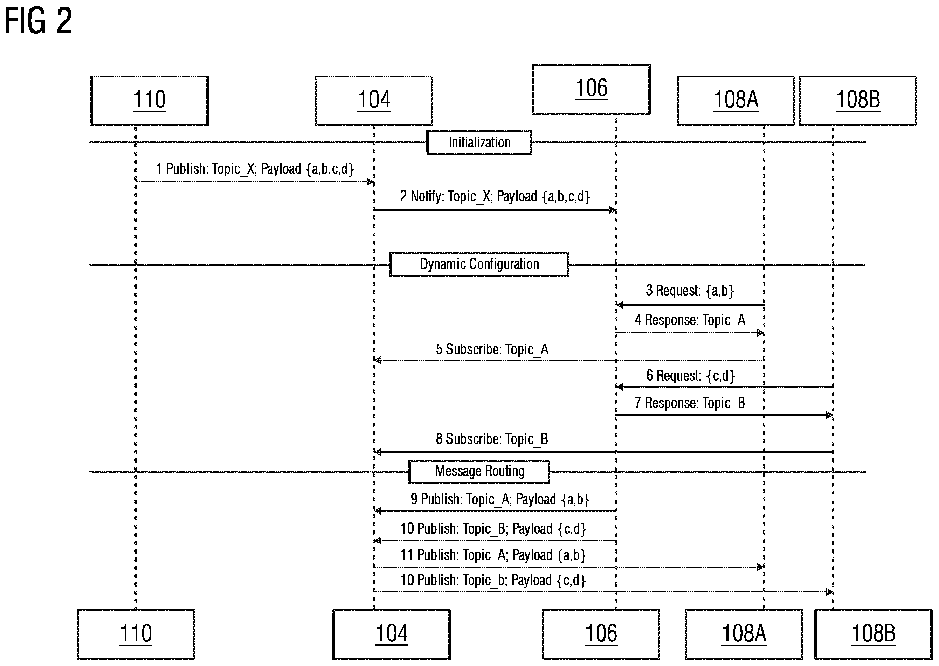

FIG. 2 illustrates an exemplary sequence diagram detailing the flow of data and control messages among a plurality of publishers 110, the MQTT Broker Processor 104, the Payload controller 106, and multiple consumer devices 108A and 108B, in accordance with an embodiment of the present disclosure. This figure demonstrates the mechanisms by which bulk sensor payloads are dynamically partitioned, routed, and delivered solely to those consumers who have explicitly requested particular subsets, all within a resource-constrained edge device environment as described in the present disclosure.

In the initialization phase, publisher 110 is configured to publish a bulk payload to Topic_X, embedding datapoints {a, b, c, d}-representative of aggregated sensor readings-by utilizing the MQTT PUBLISH protocol routed over TCP (for instance, port 1883). The MQTT Broker Processor 104 is configured to receive this PUBLISH message, parse the encapsulated JSON or equivalent serialized payload, and trigger an internal notification to the Payload controller 106, signifying Topic_X has received a new payload with datapoints {a, b, c, d}. This notification step is configured via protocol-level callback registration or direct message passing as per the present disclosure, ensuring immediate awareness of new data arrivals and setting up temporary in-memory buffering of the payload to support downstream operations.

During the dynamic configuration phase, the present disclosure enables subscriber-specific customization of data extraction. Consumer device 108A is configured to issue a request to the Payload controller 106, specifying only a specific subset-datapoints {a, b}-by providing a formal subscription requirement (for example, "temperature, humidity" out of a larger environmental data set). The Payload controller 106 is configured to act upon this request and determine an appropriate dynamically named topic (Topic_A), in accordance with an internal naming convention that uniquely identifies both the source topic and consumer-required subset. The Payload controller 106 is configured to respond to 108A with the allocated topic mapping, and is configured to subscribe to Topic_A on behalf of consumer 108A, essentially orchestrating future routing for only the {a, b} subset to 108A. In a parallel interaction, consumer device 108B is configured to transmit its requirement for datapoints {c, d} to the Payload controller 106, which is configured to reply with a tailored mapping to Topic_B and establish a subscription on behalf of 108B to Topic_B. This process leverages the Payload controller 106's programmable logic to maintain a topic-payload registry, mapping memory-resident subset payload buffers to dynamic topic identifiers as stipulated by the present disclosure.

In the message routing phase, as new bulk payloads or updates arrive, the MQTT Broker Processor 104 in coordination with the Payload controller 106 is configured to extract only the subscriber-specific subsets from buffered payloads. The Payload controller 106 is configured to apply a filter-matching algorithm-such as a subscription-based parsing algorithm or pattern-matching algorithm-against the payload registry, extracting datapoints {a, b} and instructing the MQTT Broker Processor 104 to publish only this subset to Topic_A. The datapoints {c, d} are similarly partitioned and published to Topic_B for 108B. Steps 11 and 12 further illustrate the continuous nature of this process, with repeated extraction and publishing of new or updated subsets to their corresponding dynamic topics. This ensures that each consumer is configured to receive only the minimal necessary data as per their explicit subscription request, rather than the entire bulk payload, exemplifying the resource-conserving advantages detailed in the present disclosure.

Throughout all operations, the Synchronization Mechanism 112 is configured to actively synchronize state and memory buffer access between the MQTT Broker Processor 104 and the Payload controller 106. In one example, the Synchronization Mechanism 112 is configured to achieve this through shared memory regions, message queues, or semaphore-guarded buffer access protocols, as described in the present disclosure, ensuring integrity of payload extraction and consistent allocation of resources.

The coordinated actions of the Payload controller 106 and MQTT Broker Processor 104 are configured to effectuate a system where memory and processor time on the edge device hardware 102 are allocated with precision-only for the requested data subsets, not for redundant or unused information. This dynamic, per-subscriber data partitioning model replaces the conventional static topic routing and broad payload delivery mechanisms, providing a scalable solution for environments such as smart manufacturing, industrial automation, or loT deployments where edge resources are severely limited and efficiency is paramount.

Furthermore, the edge device hardware 102 is configured to manage network interface queue allocation and processor time slicing, isolating MQTT communication paths and guaranteeing predictable message delivery even under high load. Temporary memory buffers are dynamically allocated proportional to anticipated subset sizes and promptly released after delivery, maximizing throughput and minimizing latency. In one example, the edge device hardware 102 is configured to allocate memory buffers for temporary storage of MQTT payload data such that system throughput and latency are maintained.

The System controller 114 is configured to continuously track and visualize resource utilization metrics (CPU and RAM) per processing component. In one example, the System controller 114 is configured to generate dynamic visualization data representing the determined resource usage metrics. In one example, the System controller 114 is configured to display a performance dashboard based on the dynamic visualization data, thereby facilitating operational awareness and capacity management during MQTT message routing. In one example, the System controller 114 is configured to issue an alert if processing reaches a threshold, such as 75% CPU, allowing proactive resource allocation. In one example, the System controller 114 is configured to update visualization panels onscreen or via a remote web interface in real time, showing system status summaries, historical usage trends, and actionable insights.

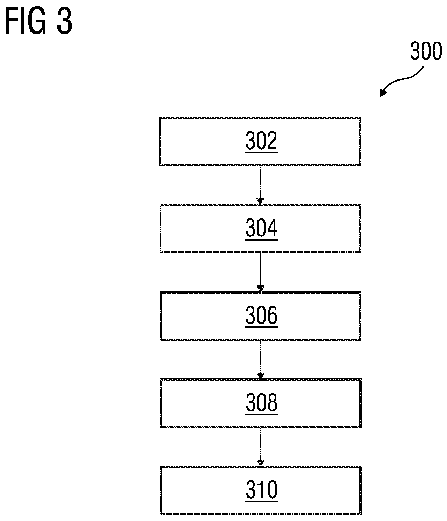

FIG. 3 is a process flowchart illustrating an exemplary method 300 for dynamically routing a plurality of Message Queuing Telemetry Transport (MQTT) message payload subsets to at least one consumer device based on individual subscription needs, according to an embodiment of the present disclosure.

At step 302, a bulk payload comprising a plurality of datapoints is received by an MQTT Broker Processor from at least one publisher onto a designated MQTT topic. The bulk payload is typically formatted as a serialized message object, such as a JSON structure containing multiple key-value pairs representing sensor or device data.

At step 304, at least one subscriber-specified subset is determined from the plurality of datapoints by a Payload controller integrated with the MQTT Broker Processor. This determination is performed based on explicit subscription requirements solicited from at least one consumer device. The Payload controller applies subscriber preference matching algorithms to parse subscription requests and extract only the required datapoint fields for each consumer.

At step 306, a dynamically named MQTT topic is generated by the Payload controller for the determined subscriber-specified subset according to a predetermined naming convention. The naming convention may incorporate original topic identifiers, payload field descriptors, or subscriber-specific identifiers to ensure unique and discoverable topic labels.

At step 308, the determined subscriber-specified subset is allocated by the Payload controller to the dynamically named MQTT topic, forming an association in an internal payload-topic mapping registry. This enables targeted routing of only the relevant subset of datapoints to each interested consumer device.

At step 310, the determined subscriber-specified subset is output by the MQTT Broker Processor to the at least one consumer device via the dynamically named MQTT topic. This targeted data delivery minimizes memory and processing resource consumption at resource-constrained edge devices, since only the necessary subset-not the entire bulk payload-is transmitted to each subscriber.

The present disclosure can take the form of a computer program product comprising program modules, such as instructions that implement an MQTT Broker Processor (104) and a Payload controller (106), accessible from a computer-usable or computer-readable medium having stored program code for use by or in connection with one or more computers, processors, or instruction execution systems within a resource-constrained edge device environment (102). For the purposes of this description, a computer-usable or computer-readable medium encompasses any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device), and includes non-transitory physical computer-readable media such as semiconductor or solid-state memory, magnetic tape, a removable computer diskette, random access memory (RAM), read-only memory (ROM), rigid magnetic disk and optical disk such as compact disk read-only memory (CD-ROM), compact disk read/write, and DVD. Both processing hardware and logic modules for implementing each aspect of the present technology-including bulk MQTT message handling, subscriber-specified data extraction, and dynamic topic allocation-can be centralized within a single edge node or distributed across multiple components (or a combination thereof), as recognized by those skilled in the art.

While the present disclosure has been described in detail with respect to certain embodiments, it should be appreciated that the present disclosure is not limited to those embodiments. Modifications and variations may be conceived by those skilled in the art in view of this disclosure without departing from the scope of the various embodiments described herein. The scope of the present disclosure is indicated by the following claims rather than by the foregoing description, and all changes, modifications, and variations that come within the meaning and range of equivalency of the claims are to be considered within their scope. All advantageous embodiments claimed in method claims are likewise applicable to system and apparatus claims.

The described disclosure offers significant advantages over conventional MQTT messaging and edge data processing approaches. By enabling the MQTT Broker Processor (104) and Payload controller (106) to dynamically extract and route only subscriber-specific datapoint subsets, the system greatly reduces unnecessary memory consumption and processing overhead, which is especially beneficial for resource-constrained edge device hardware (102). This selective routing ensures that consumer devices (108A, 108B) only receive relevant information, improving data throughput and minimizing network congestion. The present disclosure also supports scalable topic management via dynamic naming conventions, allowing seamless adaptation as new devices and subscription requirements emerge without manual reconfiguration. Furthermore, real-time resource monitoring and intelligent buffering assure predictable performance even under varying loads, making the solution especially well-suited for industrial internet-of-things (IIoT), smart manufacturing, and mission-critical automation environments where efficiency, reliability, and low latency are paramount.

### List of references

- **100**: System for dynamic MQTT payload subset routing
- **102**: Edge device hardware (e.g., embedded gateway, industrial edge server)
- **104**: MQTT Broker Processor (responsible for receiving, parsing, and initially storing bulk MQTT messages)
- **106**: Payload controller (PaCo, responsible for determining and routing payload subsets)
- **108A**: First consumer device (e.g., an equipment monitoring interface)
- **108B**: Second consumer device (e.g., air quality monitoring device)
- **110**: Publisher (data source or sensor configured to send structured MQTT messages)
- **112**: Synchronization Mechanism (coordinates buffer access and resource allocation between MQTT Broker Processor and Payload controller)
- **114**: System controller (monitors and visualizes system resources such as CPU and memory utilization)
- **116**: Synchronization mechanism for redundant storage minimization across MQTT Broker and Payload controller components.

- **300**: Method for dynamically routing a plurality of MQTT message payload subsets to at least one consumer device
- **302**: Step to receive bulk payload by the MQTT Broker Processor.
- **304**: Step to determine subscriber-specified subsets by the Payload controller.
- **306**: Step to generate dynamically named MQTT topics by the Payload controller.
- **308**: Step to allocate subscriber-specific subsets to dynamic topics by the Payload controller.
- **310**: Step to output subscriber-specified subsets to consumer devices via dynamically named MQTT topics.

## Claims

1. A computer-implemented method (300) for routing a plurality of Message Queuing Telemetry Transport -MQTT- message payload subsets dynamically to at least one consumer device (108A, 108B) based on individual subscription needs, comprising:
receiving (302), by an MQTT Broker Processor (104), a bulk payload from at least one publisher (110) onto a MQTT topic, the bulk payload comprising a plurality of datapoints;
determining (304), by a Payload controller (106) integrated with the MQTT Broker Processor (104), at least one subscriber-specified subset from the plurality of datapoints, based on explicit subscription requirements of at least one consumer device (108A, 108B);
generating (306), by the Payload controller (106), a dynamically named MQTT topic associated with the determined at least one subscriber-specified subset according to a predetermined naming convention;
allocating (308), by the Payload controller (106), the determined at least one subscriber-specified subset to the dynamically named MQTT topic for routing to the at least one consumer device (108A, 108B);
outputting (310), by the MQTT Broker Processor (104), the determined at least one subscriber-specified subset to the at least one consumer device (108A, 108B) via the dynamically named MQTT topic, thereby reducing memory and processing resource consumption at resource-constrained edge devices (102).

2. The method according to claim 1, further comprising:
receiving, by the Payload controller (106), a plurality of bulk payloads from a plurality of publishers (110), each onto at least one MQTT topic;
determining, by the Payload controller (106), combinational datapoints requested by at least one consumer device (108A, 108B) from at least two of the plurality of received bulk payloads;
generating, by the Payload controller (106), a composite subset comprising the determined combinational datapoints;
allocating, by the Payload controller (106), the composite subset to a further dynamically named MQTT topic;
outputting, by the Payload controller (106), the composite subset to the at least one consumer device (108A, 108B), thereby reducing message subscription and filtering complexity at the at least one consumer device.

3. The method according to any of the preceding claims, further comprising:
synchronizing, between the MQTT Broker Processor (104) and the Payload controller (106), extraction of the at least one subscriber-specified subset from the received bulk payload such that memory resources are allocated for the at least one subscriber-specified subset, thereby minimizing redundant data storage and memory usage based on the synchronization.

4. The method according to any of the preceding claims , further comprising:
determining, by a System controller (114) within an edge device (102), resource usage metrics comprising at least processor utilization and memory consumption during MQTT message payload processing;
generating, by the System controller (114), dynamic visualization data representing the determined resource usage metrics;
displaying, by the System controller (114), a performance dashboard based on the dynamic visualization data, thereby facilitating operational awareness and capacity management during MQTT message routing.

5. The method according to any of the preceding claims, further comprising:
allocating, by edge device hardware (102), a network interface queue dedicated to MQTT protocol traffic;
allocating, by edge device hardware (102), processor time slices to at least the MQTT Broker Processor (104) and the Payload controller (106) for message processing;
allocating, by edge device hardware (102), memory buffers for temporary storage of MQTT payload data such that system throughput and latency are maintained.

6. A system (100) for routing a plurality of MQTT message payload subsets dynamically to at least one consumer device (108A, 108B) according to individual subscription requirements, comprising:
an MQTT Broker Processor (104) configured to receive s302) at least one bulk payload from at least one publisher (110) onto a MQTT topic, the bulk payload comprising a plurality of datapoints;
a Payload controller (106) integrated with the MQTT Broker Processor (104) and configured to determine (304) at least one subscriber-specified subset from the plurality of datapoints, in accordance with explicit subscription requirements of at least one consumer device (108A, 108B);
the Payload controller (106) further configured to generate (306) a dynamically named MQTT topic mapped to the at least one subscriber-specified subset according to a predetermined naming convention;
the Payload controller (106) further configured to allocate (308) the determined at least one subscriber-specified subset to the dynamically named MQTT topic for further routing;
the MQTT Broker Processor (104) further configured to output (310) the determined at least one subscriber-specified subset to the at least one consumer device (108A, 108B) via the dynamically named MQTT topic, thereby reducing resource utilization at edge hardware (102).

7. The system according to claim 6, wherein the Payload controller (106) is further configured to:
receive a plurality of bulk payloads from a plurality of publishers (110);
determine combinational datapoints requested by at least one consumer device (108A, 108B) from at least two of the plurality of bulk payloads for generating a composite subset;
allocate the composite subset to a further dynamically named MQTT topic; and
output the composite subset to the at least one consumer device (108A, 108B), thereby reducing consumer device processing burden.

8. The system according to any of the preceding system-based claims , further comprising:
a synchronization mechanism (116) configured to synchronize extraction of the at least one subscriber-specified subset between the MQTT Broker Processor (104) and the Payload controller (106), thereby minimizing redundant data storage and memory usage.

9. The system according to any of the preceding system-based claims, further comprising:
a System controller (114) within edge device hardware (102) configured to determine at least processor usage and memory consumption associated with MQTT message payload routing;
generate dynamic visualization data;
display a resource dashboard for operational visibility.

10. The system according to any of the preceding system-based claims, wherein the edge device hardware (102) is further configured to allocate a plurality of network interface queues dedicated to MQTT protocol traffic, allocate processing time slices to at least the MQTT Broker Processor (104) and the Payload controller (106), and allocate memory resources for temporary MQTT message storage, thereby maintaining system throughput and responsiveness.
